# EUROPEAN PATENT APPLICATION

(11) **EP 0 839 773 A1**
(43) Date of publication of application: **06.05.1998**
(21) Application number: 97203381.5
(22) Date of filing: 04.11.1997
(51) Int. Cl.: C04B 18/04, C04B 14/36

(54) **Method of making a building material**

(30) Priority: 04.11.1996 NL 1004419
(71) Applicant: KONINKLIJKE WEGENBOUW STEVIN B.V., NL-3527 HS Utrecht (NL)
(72) Inventor: Henquet, Karel, 5602 BK Eindhoven (NL)
(74) Representative: Assendelft, Jacobus H.W.

(57) **Abstract**

Method for preparing a building compound, wherein a possibly contaminated soil type, preferably containing clay, as e.g. contaminated mud or spoil is collected, the sand and water content of which is brought to a level required for said building compound, and adding a binding or agglomeration agent. The invention is also concerned with a building compound attained with the method mentioned above, and a product made with said building compound.

## Description

Until recently, contaminated soil like contaminated mud or spoil were considered environmetal hazardous compounds, that must be dumped and stored in a controlled fashion. The object of the invention is processing contaminated soil, preferably soil containing clay, like e.g. mud or spoil, such that it is possible to give it an economical useful purpose. Therefor it is suggested to process soil, preferably soil containing clay, e.g. mud or spoil, such that a content of rough granules, e.g. a sand content of approximately 20-40%, preferably approximately 30% and a water content of approximately 15-25% is attained, and thereafter to add an agent to limit the leaching of contaminating substances therefrom to a predetermined level. Preferably, said processing is carried out such that a content of fine granules, e.g. a mud or clay content of approximately 10-30%, preferably approximately 20% is attained.

The invention is based on the appreciation, that soil of which the content of one or more contaminating substances is above a level above which the soil may not be used as building material or only be used as a building material if protective measurements are made, e.g. wrapping in foil, gives a leaching that is substantially lower then assumed based on the content of said one or more chemical contaminating substances by treatment with a convenient chemical, such that said soil may be applied after all. For instance said contaminated soil can be brought to a contamination level below the goal values as e.g. given in the last version of the "Bouwstoffebesluit" of the "Nederlandse Wet Bouwbesluit", as in force prior to the priority date of this patent application.

The object of the present invention is also a method in which soil is tested on contaminations and if it comes out that one or more of the goal values for the contamination is exceeded, the soil is treated with a substance such that said one or more goal values is no longer exceeded.

An agent to limit the leaching can be a (chemical) binding agent, but also an agglomeration agent, like a surfactant, to remove water adhering to soil granules and/or present in the pores of said granules irreversibly. Such agglomeration agent is e.g. Consolid, available with the company Consolid from Olsburg, Germany. The agglomeration agent contains preferably at least 3% organic compounds, and further approximately 80% very fine granules of cement and chalkhydrate. The binding or agglomeration agent preferably takes care to substantially lower the water absorbing capacity of the soil, e.g. mud or spoil, treated in this way. The required water content can e.g. be provided by dewatering the mud or spoil (e.g. by pressing, vacuum treatment, heating). The content rough granules required, e.g. sand content, can e.g. be provided by admixing of sand. In stead of sand, an equivalent as crunshed or milled asphalt or concrete can be used as well. Mixtures of e.g. sand, crunshed asphalt and/or concrete are feasible as well. The mixture provided in this way can e.g. be used in a road foundation. Use as covering soil for dump sites, and as part of embankments and noise walls and water damming structures is feasible as well.

In the further description the invention is illustrated by way of some experiments. Although the experiments 1 and 2 are focussed on spoil of category IV, it will be appreciated that the invention is not limited to such use. It will be appreciated as well that it is possible according to the invention to make a building material from preferably clay containing soil, e.g. mud or spoil, that is not or only limited contaminated.

### Experiment 1

Three mud samples (category IV mud) were taken from a quantity excavated material of the construction for the new lock at Belfeld (Netherlands) near the Maas, which first were exposed to a period of drying ("ageing") by the air, to reach a humidity of 16%. 30% of sand was added to two of the samples, as well as the Consolid system in a dosage of about 1 and 2 % "Solidry" respectively with the correspondingly prescribed dosage of liquid "C444". Subsequently, the initial CBR value was determined for all three samples, as well as the saturated CBR value (i.e. the CBR value after submerging in water during 28 days). The results are shown in Table 1. The saturated CBR value for the sample that was not treated with Consolid was about 50% of the initial CBR value. The saturated CBR value for the sample with 1% Consolid was about 200%, for the sample with 2% Consolid was about 600% higher with respect to the initial CBR value. The sample treated with 2% Consolid can be characterised as a soil of a type with excellent bearing capacity, useable as a good embankment material with the qualities as a reasonable foundation material.

Despite the fact that this is a mud of the category IV (it contains i.a. relatively much zinc and cadmium), examination of both the pre-densified samples treated with Consolid according to NEN 7345 revealed that the diffusion of substances does not exceed the limit values from the Bouwstoffenbesluit and the Category-1 limit values of the "IPO-interimbeleid". This irrestpective the way of application (isolated, continuesly or intermittently wetted).

### Experiment 2

mud from the same source as in Experiment 1 was dried to a humidity of 16%and mixed with 2% "Solidry" and the corresponding prescribed dosage liquid "C444". This sample was densified in a proctormould, and subsequently exposed to a water permeability test in a so called DIN-test. Therefor the sample is wrapped in a membrane, and subsequently loaded with a 2-meter water column (0.2 bar). After a saturation period of 1 week, no deformation of the approximately 60 mm. high sample was found. The calculated k-value measured 2*10⁻⁸m/s. It is expected that the sample from Experiment 1, treated with 2% Consolid, will give a calculated k-value of at least 7*10^{-11m/s}.

### Experiment 3

A part of the district road N361 between Mensingeweer and Ranum (Netherlands) was reconstructed with an approximately 500 mm thick road foundation by milling the old asphalt structure and foundation away and mixing this milling product with clay and stabilizing it with Consolid. A 190 mm thick asphalt layer was applied on this new foundation. It came out that the new road foundation had a mean modulus of elasticity that is comparable to rubble granules/mixture granules.

## Claims

1. Method for preparing a building compound, wherein a possibly contaminated soil type, preferably containing clay, as e.g. contaminated mud or spoil is collected, the sand and water content of which is brought to a level required for said building compound, and adding a binding or agglomeration agent.

2. Method according to claim 1, wherein the binding or agglomeration agent expels water sticking to the soil granules and/or contained in the pores thereof, wherein the binding or agglomeration agent avoids, that water can stick to soil granules and/or penetrate pores of soil granules.

3. Building compound made with the method according to claim 1 or 2, or else a product, prepared with such building compound.

4. Method according to claim 1 or 2, wherein the binding or agglomeration agent contains at least about 3% organic substances.

5. Method according to claims 1, 2 or 4, wherein the binding or agglomeration agent contains more then approximately 80% very fine grained cement and calkhydrate.

6. Method according to claims 1, 2, 4 or 5, wherein the binding or agglomeration agent comprised a solid and a liquid part.

7. Method according to claims 1, 2, 4, 5 or 6, wherein the soil is contaminated such that, without treatment, this may not be used unrestricted according to the "Bouwstoffenbesluit" (Dutch Act "Bouwbesluit") or exceeds one or more limit values for contaminating substances according to the "Bouwstoffenbesluit".

8. Method for the preparation of a road, covering layer for a dump site, sound wall, embankment or similar structure wherein one or more soil layers are applied, and wherein the soil is made according to the method according to claim 1, 2, 4, 5, 6 or 7.

9. Use of a binding or agglomeration agent in the preparation of a building compound from contaminated soil.
